# EUROPEAN PATENT APPLICATION

(11) **EP 1 117 061 A1**
(43) Date of publication of application: **18.07.2001**
(21) Application number: 00100689.9
(22) Date of filing: 14.01.2000
(51) Int. Cl.: G06K 13/08, G06K 7/00

(54) **IC card connector**

(71) Applicant: MOLEX INCORPORATED, Lisle Illinois 60532 (US)
(72) Inventor: Zuin, Gianni, 35035 Mestrino, Padova (IT)
(74) Representative: Blumbach, Kramer & Partner GbR

(57) **Abstract**

An IC card connector (10) is provided for connecting an IC card (20) having a terminal array. The connector includes a base member (12) having a receptacle (22) for receiving the IC card for movement between a preload position and a latched position. A latch/release member (14) is movably mounted on the base member (12) and is engageable with the IC card for movement therewith between the preload and latched positions. A latch (46,52) is operatively associated between the latch/release member (14) and the base member (12) for locking the latch/release member and IC card (20) in the latched position automatically in response to moving the IC card to the latched position. A spring (18) is operatively associated between the latch/release member (14) and the base member (12) for moving the latch/release member and IC card (20) back to the preload position automatically in response to releasing the latch means (46,52).

## Description

### Field of the Invention

This invention generally relates to the art of electrical connectors and, particularly, to an IC card connector for connecting an IC card, such as a multi media card, in an IC card reader system such as a videocamera or smartphone or the like.

### Background of the Invention

IC cards have been developed and contain IC's (integrated circuits) including memory circuits, such as rams (random access memories), and control circuits, such as CPUs (central processing units). A special type of IC card, called a multi media card (or "MMC") is of increasing interest and is used in small electronic devices such as videocameras, smartphones, music players and the like. Multi media cards normally include a terminal array for connection through a card reader system to the external equipment. The connector usually includes some form of IC card socket and a plurality of electrodes or contacts exposed in the socket for engaging the terminal array of the IC card. The card is inserted into and removed from the socket, and the connector contacts are resilient or comprise springy contacts for yieldably engaging the terminal array of the card when the card is inserted into the socket.

With the ever-increasing miniaturization of IC cards and their respective connectors, various problems continue to arise. For instance, the very handling of the miniature IC cards is difficult, and proper positioning of the cards in the connector presents corresponding problems when the card is inserted into and removed from the card-receiving cavity or other receptacle means of the connector. Such card connectors may have locking means for holding the IC card in a locked reading position, but such locking means often have reliability problems. Still further, it often is very difficult to grip and remove the inserted IC card from the connector. This invention is directed to solving these various problems in a multi media card connector which is reliable and simple to manufacture and assemble.

### Summary of the Invention

An object, therefore, of the invention is to provide a new and improved IC card connector for connecting an IC card having a terminal array, in an IC card reader system or the like.

In the exemplary embodiment of the invention, the connector includes a base member having receptacle means for receiving the IC card for movement between a preload position and a latched position. The base member also includes a plurality of electrically conductive contacts for engaging the terminal array of the IC card. A latch/release member is movably mounted on the base member and is engageable with the IC card for movement therewith between the preload and latched positions. Latch means are operatively associated between the latch/release member and the base member for locking the latch/release member and IC card in the latched position automatically in response to moving the IC card to the latched position. Biasing means are operatively associated between the latch/release member and the base member for moving the latch/release member and IC card back to the preload position automatically in response to releasing the latch means.

As disclosed herein, the latch means is operatively associated between the base member and a flexible latch arm on the latch/release member. The flexible latch arm is an integral portion of the latch/release member and is structured for flexing movement in a direction generally perpendicular to the direction of movement of the IC card. The flexible latch arm has a distal end exposed at the front of the base member for manual engagement to flex the latch arm and release the latch means.

Other features of the invention include stop means on the latch/release member for preventing the IC card from being moved back from the latched position to the preload position until the latch means is released. The latch means is formed by opposing latch shoulders on the base member and the flexible latch arm. The latch/release member includes an abutment shoulder engageable by a leading edge of the IC card so that the latch/release member moves with the IC card from the preload position to the latched position. The base member includes channel means within which the latch/release member slides generally parallel to the movement of the IC card. The biasing means comprises a coil spring sandwiched between a portion of the base member and a portion of the latch/release member.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of an IC card connector embodying the concepts of the invention, with an IC card about to be inserted into the connector;
FIGURE 2 is a view similar to that of Figure 1, with the IC card inserted into the connector to a preload position;
FIGURE 3 is a view similar to that of Figures 1 and 2, with the IC card fully inserted into the connector to a latched position;
FIGURE 4 is a top plan view of the connector;
FIGURE 5 is an enlarged perspective view of the latch/release member isolated from the connector; and
FIGURE 6 is a fragmented enlarged perspective view of the area of the base member which includes the latch means.

### Detailed Description of the Preferred Embodiment

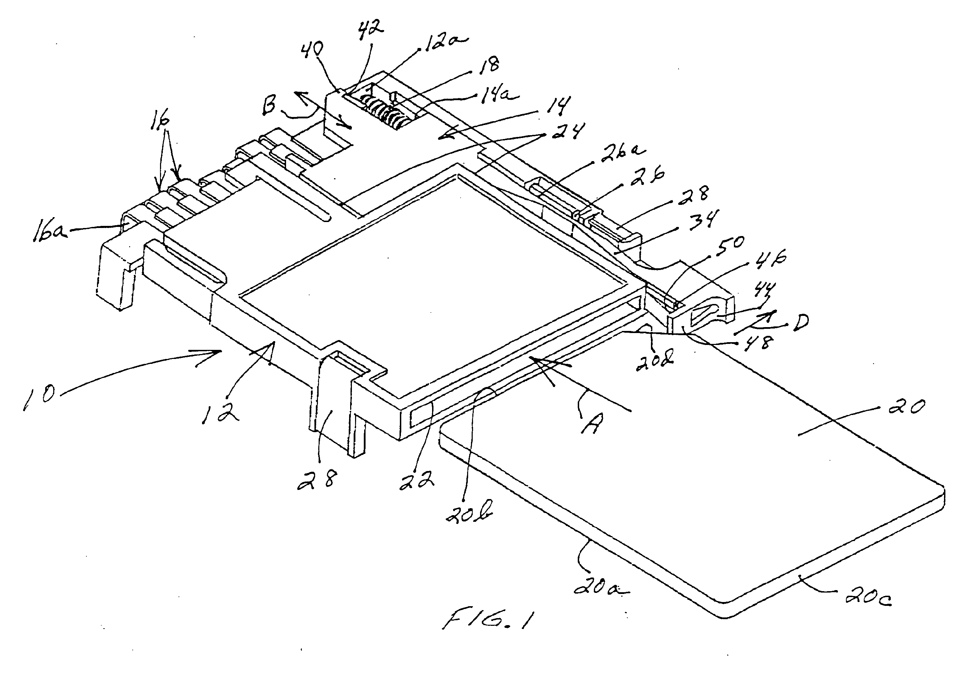

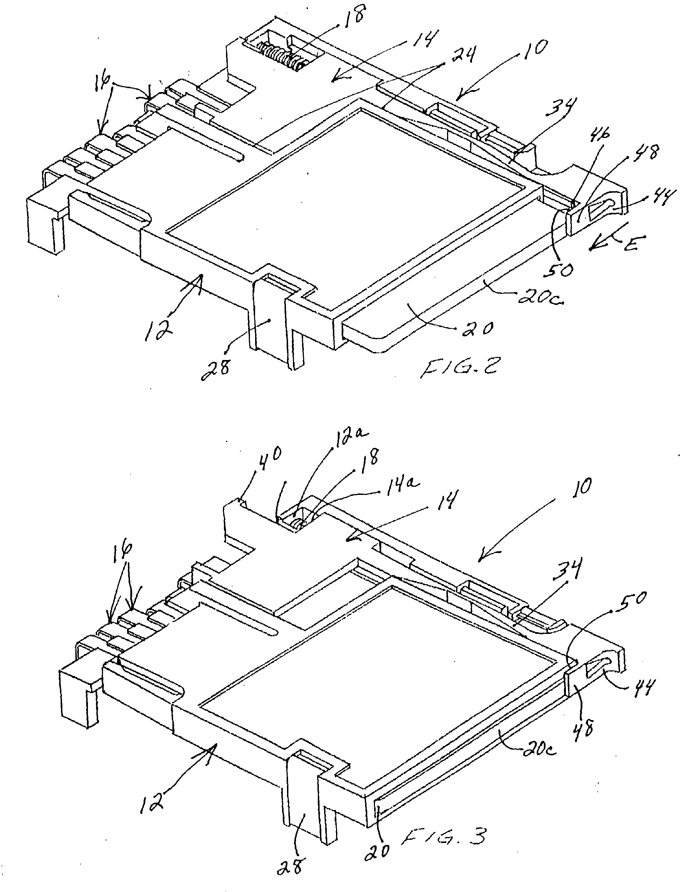

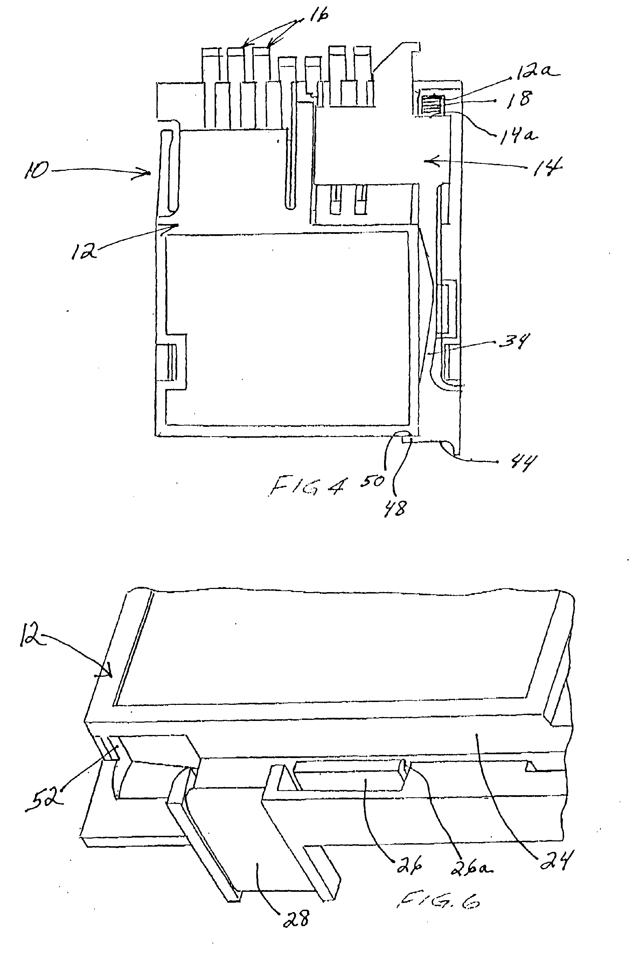

Referring to the drawings in greater detail, and first to Figure 1, the invention is embodied in an IC card connector, generally designated 10, which is extremely simple and includes two basic components, namely a base member, generally designated 12, and a latch/release member, generally designated 14, along with a plurality of conductive contacts, generally designated 16 and a coil spring 18 as described hereinafter. An IC card 20 is inserted into a receptacle means 22 in body member 12 of connector 10 in the direction of arrow "A" until the IC card reaches a preload position shown in Figure 2. The IC card is a miniature card of conventional or known construction and includes a terminal array (not shown) on a bottom side 20a of the card. In the preferred embodiment, the IC card is a multi media card ( or "MMC") as is used in electronic devices such as videocameras and smartphones. As will be described in greater detail hereinafter, IC card 20 is inserted into the connector in the direction of arrow "A" (Fig. 1) to a preload position shown in Figure 2 and then to a latched or reading position shown in Figure 3.

More particularly, base member 12 of connector 10 includes a channel means 24 within the top thereof for slidably receiving latch/release member 14 for movement in the direction of double-headed arrow "B" (Fig. 1). The latch/release member is snapped into the channel means past a resilient locking arm 26 which has a hooked flange 26a at the top thereof which holds the latch/release member in the channel means of the base member. The connector and base member are adapted for mounting on a printed circuit board, and conductive contacts 16 have tail portions 16a for connection to appropriate circuit traces on the board, as by soldering. The conductive contacts extend into base member 12 and have contact portions (not visible in the drawings) for engaging the terminal array on bottom side 20a of IC card 20, as is conventional in the art. A pair of metal clips or "fitting nails" are secured to opposite sides of base member 12 for fixing the connector to the printed circuit board, as by soldering the metal clips to mounting pads on the circuit board. Coil spring 18 is longitudinally sandwiched between a wall portion 12a of base member and a wall portion 14a of latch/release member 14.

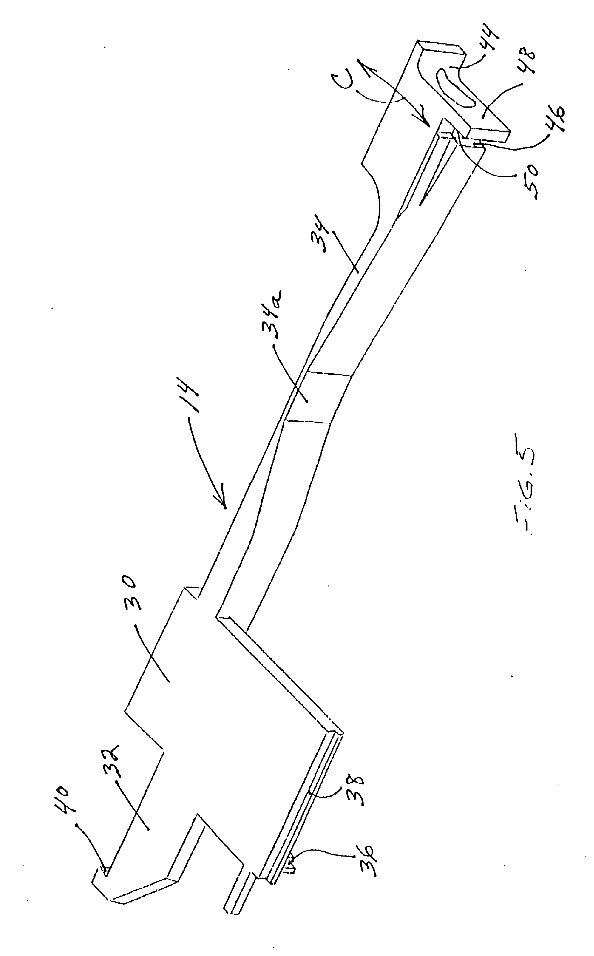

Referring to Figure 5 in conjunction with Figures 1-4, latch/release member 14 includes an enlarged body portion 30, a rearwardly projecting arm 32 and a forwardly projecting latch arm 34. Body portion 30 has an abutment shoulder 36 for engaging a leading edge 20b of IC card 20. A side lip 38 projects from the body portion for engagement within a slot (not shown) within channel means 24 (Fig. 1) for cooperating with hook 26a to hold the latch/release member for sliding movement within the channel means. Rear arm 32 of the latch/release member has a stop hook 40 for engaging a shoulder 42 of base member 12 to define the forward limit position of the latch/release member.

Still referring to Figure 5, latch arm 34 of latch/release member 14 performs multiple functions. The entire latch/release member may be unitarily molded of plastic material or the like, and latch arm 34 is molded thinner in an area 34a so that a distal end 44 of the latch arm can flex in the direction of double-headed arrow "C". The latch arm has an inwardly, forwardly facing latch shoulder 46 to latch the latch/release member and the IC card in its latched position shown in Figure 3 and described hereinafter. Finally, a flange 48 projects inwardly of distal end 44 of the latch arm and defines a rearwardly facing stop shoulder 50 for engaging the trailing edge 20c of the IC card once the IC card is inserted to its preload position as shown in Figure 2. This stop shoulder prevents the IC card from being pulled out of the connector unless the latch arm is flexed outwardly to disengage the stop shoulder from the trailing edge of the card.

Figure 6 shows a rearwardly facing latch shoulder 52 formed within channel means 24 at the front right-hand corner of base member 12. Latch shoulder 52 is positioned for engagement by forwardly facing latch shoulder 46 (Fig. 5) of latch arm 34 of latch/release member 14.

The operation of connector 12 in conjunction with IC card 20 now will be described. Figure 1 shows the IC card about to be inserted into receptacle means 22 of base member 12 of the connector in the direction of arrow "A". During insertion, an angled corner 20d at leading edge 20b of the card engages flange 48 at the distal end of flexible latch arm 40 and biases the latch arm outwardly in the direction of arrow "B". The IC card is inserted into the receptacle means until trailing edge 20c of the card clears flange 48 whereupon distal end 44 of the flexible latch arm snaps back inwardly in the direction of arrow "E" as seen in Figure 2. This defines a preload position of the card. Stop shoulder 50 on the rear side of flange 48 engages trailing edge 20c of the card to prevent the card from being pulled back out of the connector unless latch arm 34 is flexed back outwardly.

Once IC card 20 is inserted to the preload position shown in Figure 2 and described above, the IC card and latch/release member 14 move as a unit to a final latched or reading position as shown in Figure 3. In the latched position, coil spring 18 becomes compressed as is seen clearly in Figure 3. This cocks or spring-loads latch/release member 14. In addition, latch shoulder 46 (Fig. 5) on the inside of flexible latch arm 34 seats behind latch shoulder 52 (Fig. 6) at the front right-hand corner of body member 12. In essence, latch shoulders 46 and 52 define a latch means operatively associated between latch/release member 14 and base member 12 for locking the latch/release member and IC card in the latched position of Figure 3 automatically in response to moving the IC card to the latched position.

In order to move the IC card back from its latched position to its preload position of Figure 2, flexible latch arm 34 is moved outwardly in the direction of arrow "D" (Fig. 1) or opposite the direction of arrow "E" (Fig. 2) a sufficient amount to cause latch shoulder 46 (Fig. 5) on the latch arm to disengage from latch shoulder 52 (Fig. 6) on the base member. Coil spring 18 now acts as a biasing means operatively associated between the latch/release member and the base member for moving the latch/release member and IC card back to the preload position automatically in response to releasing the latch means of latch shoulders 46 and 52. It should be noted that flange 48 is of a length whereby the latch shoulders can be released without moving stop shoulder 50 on the back side of the flange out of engagement with trailing edge 20c of the IC card. Therefore, the latch means of latch shoulders 46 and 52 can be released without completely disengaging flexible latch arm 34 (i.e., latch/release member 14) from the IC card.

If it is desired to completely remove the IC card from the connector, flexible latch arm 34 is flexed or pivoted further outwardly in the direction of arrow "D" (Fig. 1) until flange 48 and stop shoulder 50 are completely removed from trailing edge 20c of the IC card, whereupon the card can be pulled back out of the connector opposite the direction of arrow "A" (Fig. 1).

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. An IC card connector (10) for connecting an IC card (20) having a terminal array, comprising:
a base member (12) having receptacle means (22) for receiving the IC card (20) for movement between a preload position and a latched position, the base member including a plurality of electrically conductive contacts (16) for engaging the terminal array of the IC card;
a latch/release member (14) movably mounted on the base member (12) and engageable with the IC card for movement therewith between said preload and latched positions;
latch means (46,52) operatively associated between the latch/release member (14) and the base member (12) for locking the latch/release member and IC card in said latched position automatically in response to moving the IC card to the latched position; and
biasing means (18) operatively associated between the latch/release member (14) and the base member (12) for moving the latch/release member and IC card back to said preload position automatically in response to releasing said latch means.

2. The IC card connector of claim 1 wherein said latch/release member (14) includes stop means (50) for preventing the IC card from being moved back from the latched position to the preload position until the latch means (46,52) is released.

3. The IC card connector of claim 1 wherein said biasing means comprises a coil spring (18) sandwiched between a portion (12a) of the base member (12) and a portion (14a) of the latch/release member (14).

4. The IC card connector of claim 1 wherein said latch/release member (14) includes an abutment shoulder (36) engageable by a leading edge (20b) of the IC card (20) so that the latch/release member moves with the IC card from the preload position to the latched position.

5. The IC card connector of claim 1 wherein said latch means (46,52) is operatively associated between the base member (12) and a flexible latch arm (34) on the latch/release member (14).

6. The IC card connector of claim 5 wherein said flexible latch arm (34) is structured for flexing movement in a direction (C) generally perpendicular to the direction (A) of movement of the IC card.

7. The IC card connector of claim 6 wherein said flexible latch arm (34) comprises an integral portion of the latch/release member (14).

8. The IC card connector of claim 7 wherein said flexible latch arm (34) has a distal end (44) exposed at the front of the base member (12) for manual engagement to flex the latch arm and release said latch means (46,52).

9. The IC card connector of claim 5 wherein said latch means comprises opposing latch shoulders (46,52) on the base member (12) and the flexible latch arm (34).

10. The IC card connector of claim 1 wherein said base member includes channel means (24) within which the latch/release member (14) slides generally parallel to the movement of the IC card (20).

11. An IC card connector (10) for connecting an IC card (20) having a terminal array, comprising:
a base member (12) having receptacle means (22) for receiving the IC card (20) for movement between a preload position and a latched position, the base member including a plurality of electrically conductive contacts (16) for engaging the terminal array of the IC card;
a latch/release member (14) movably mounted on the base member (12) and engageable with the IC card (20) for movement therewith between said preload and latched positions, the latch/release member including a flexible latch arm (34), an abutment shoulder (36) engageable by a leading edge (20b) of the IC card so that the latch/release member moves with the IC card from the preload position to the latched position and stop means (50) for preventing the IC card from being moved back from the latched position to the preload position;
latch means (46,52) operatively associated between the flexible latch arm (34) on the latch/release member (14) and the base member (12) for locking the latch/release member and IC card (20) in said latched position automatically in response to moving the IC card to the latched position; and
biasing means (18) operatively associated between the latch/release member (14) and the base member (12) for moving the latch/release member and IC card (20) back to said preload position automatically in response to releasing said latch means (46,52).

12. The IC card connector of claim 11 wherein said biasing means comprises a coil spring (18) sandwiched between a portion (12a) of the base member (12) and a portion (14a) of the latch/release member (14).

13. The IC card connector of claim 11 wherein said flexible latch arm (34) is structured for flexing movement in a direction (C) generally perpendicular to the direction (A) of movement of the IC card.

14. The IC card connector of claim 13 wherein said flexible latch arm (34) comprises an integral portion of the latch/release member (14).

15. The IC card connector of claim 14 wherein said flexible latch arm (34) has a distal end (44) exposed at the front of the base member (12) for manual engagement to flex the latch arm and release said latch means (46,52).

16. The IC card connector of claim 11 wherein said latch means comprises opposing latch shoulders (46,52) on the base member (12) and the flexible latch arm (34).

17. The IC card connector of claim 11 wherein said base member includes channel means (24) within which the latch/release member (14) slides generally parallel to the movement of the IC card (20).
